# EUROPÄISCHE PATENTSCHRIFT

(11) **EP 3 242 817 B1**
(45) Veröffentlichungstag und Bekanntmachung des Hinweises auf die Patenterteilung: **06.03.2019**
(21) Anmeldenummer: 16700253.4
(22) Anmeldetag: 08.01.2016
(51) Int. Cl.: B60R 19/12, B62D 25/08

(54) **STOSSFÄNGEREINRICHTUNG FÜR EIN FAHRZEUG**
BUMPER ARRANGEMENT FOR A VEHCILE
AGENCEMENT D'UN PARE-CHOCS POUR UN VÉHICULE

(30) Priorität: 09.01.2015 DE 102015200199
(43) Veröffentlichungstag der Anmeldung: 15.11.2017
(73) Patentinhaber: Bayerische Motoren Werke Aktiengesellschaft, 80809 München (DE)
(72) Erfinder: BERTHOLD, Christian, 84171 Baierbach (DE); RIEDL, Wilhelm, 85276 Pfaffenhofen (DE)
(86) Internationale Anmeldenummer: PCT/EP2016/050249
(87) Internationale Veröffentlichungsnummer: WO 2016/110559

(56) Entgegenhaltungen:
- EP-A1- 1 300 322
- EP-A1- 1 623 879
- WO-A1-03/008256
- DE-A1-102011 005 687

## Beschreibung

### TECHNISCHES GEBIET

Die vorliegende Erfindung betrifft ein Fahrzeug mit einer Stoßfängereinrichtung nach dem Oberbegriff des Patentanspruchs 1, insbesondere mit einer vorderen Stoßfängereinrichtung.

### HINTERGRUND DER ERFINDUNG

Konventionelle Stoßfängereinrichtungen für Fahrzeuge weisen eine sich quer über die Fahrzeugbreite erstreckende Stoßfängerquerträger-Anordnung auf. Insbesondere bei flachen Fahrzeugen mit einer niedrigen Fahrzeugfront, in der Kühler vorgesehen sind, stellt eine solche an der Fahrzeugfront vorgesehene Stoßfängerquerträger-Anordnung ein erhebliches Hindernis für den Teil des Fahrtwindes dar, der einen Kühlluftstrom bildet. Dieser für die Durchströmung der Kühler vorgesehene Luftmassenstrom wird von der sich vor den Kühlern erstreckenden Stoßfängerquerträger-Anordnung geteilt oder sogar abgeblockt, so dass der Kühler oder andere Komponenten nur noch suboptimal vom Kühlluftstrom durchströmt oder angeströmt werden.

### STAND DER TECHNIK

Die EP 1 300 322 A1 zeigt und beschreibt ein aus Kunststoff gestaltetes Frontmodul eines Fahrzeugs, das dazu dient, verschiedene Organe, die in den Motorraum eines Fahrzeugs gehören, sowie Karosserieteile, wie zum Beispiel Kotflügel, die Motorhaube oder eine Frontschürze, zu haltern. Derartige Karosserie- und Motorteile sind nicht an einer Stoßfängereinrichtung befestigt, sondern stets an einem Frontmodul, welches mit der tragenden Struktur des Fahrzeugs verbunden ist oder ein Teil davon ist. In Fahrtrichtung vor dieser Struktur und damit auch vor dem Frontmodul ist immer die Crash-Struktur des Fahrzeugs vorgesehen, zu der auch die Stoßfängereinrichtung gehört.

Die WO 03/008256 A1 zeigt und beschreibt ebenfalls ein Frontmodul für ein Kraftfahrzeug, welches zur Halterung einer Vielzahl von Elementen daran dient und welches zur Montageerleichterung des Kraftfahrzeugs mit daran angebrachten Elementen vorgefertigt am Kraftfahrzeug anbringbar ist. Dieses Frontmodul kann beispielsweise aus einem Kompositmaterial, wie beispielsweise einer faserverstärkten Kunstharzmatrix mit einem Kern aus Balsaholz, hergestellt sein. Das Frontmodul weist eine Kühlergrillöffnungsverstärkung auf, an der Komponenten, wie beispielsweise Kotflügel, Stoßfängerabdeckungen, Kühlergrill, Scheinwerfer usw., angebracht sind. Von der Rahmenstruktur dieses Frontmoduls ausgehend sind in Fahrtrichtung nach vorne Komponenten zur Scheinwerferaufnahme vorgesehen, zwischen denen sich eine im oberen Bereich vor der Öffnung des Rahmens gelegene, aus dem gleichen Kunststoff-Holz-Kompositmaterial bestehende Struktur zur lokalen Energieaufnahme bei Fußgänger-Kollisionen befindet. Auch bei diesem Frontmodul muss in Fahrtrichtung vor dem Frontmodul immer die Crash-Struktur des Fahrzeugs vorgesehen sein, zu der auch die Stoßfängereinrichtung gehört.

In der EP 1 623 879 A1 wird eine Rahmenstruktur eines Frontmoduls gezeigt und beschrieben, das ebenfalls der Aufnahme von Fahrzeugkomponenten dient und keine Stoßfängereinrichtung bildet. An jeder Seite der Struktur des Vorderbaus ist ein Balken oder Träger angebracht ist, der flexibel und geschwungen ist. Dieser jeweilige seitliche Träger ist mit einem Vierkantdorn in eine Vierkantausnehmung eingesetzt, die in jedem vertikalen Trägerabschnitt der rahmenartigen Vorderseite vorgesehen ist. Der jeweilige Balken oder Träger dient zur Aufnahme einer vorderen Lampeneinheit und zur Befestigung der vorderen Spitze eines jeweiligen Kotflügels. Die beiden seitlichen Träger sind über eine obere Verstrebung miteinander verbunden, wobei sich diese Verstrebung mit einem vorderen Flächenabschnitt vor dem oberen Teil der Öffnung des Rahmens erstreckt. Die Verstrebung kann aus Kunststoff bestehen, ist dann also nicht als Stoßfänger geeignet. Die Stoßfängerhaut ist an den beiden seitlichen Trägern und der Verstrebung befestigt. Es handelt sich bei diesem Vorderbau somit nur um ein Frontmodul zur Aufnahme der von den seitlichen Trägern und von der Verstrebung gebildeten Halterung für Aggregate und Karosserieelemente, vor dem noch eine Crash-Struktur mit einer Stoßfängereinrichtung vorgesehen sein muss. Zu erkennen ist auch, dass die Stoßfängerhaut vor der Öffnung des Vorderbaus vollständig geschlossen ist.

Die DE 10 2011 005 687 A1 zeigt und beschreibt einen Stoßfänger eines Kraftfahrzeugs, der aus zwei seitlichen Stoßfängerquerträger-Abschnitten und einem diese miteinander verbindenden mittleren Stoßfängerquerträger-Abschnitt besteht. Diese Stoßfängerquerträger-Abschnitte sind aus Leichtmetall-Strangpressprofilen hergestellt. Aus Gewichtsgründen weist das mittlere Strangpressprofil eine Aussparung auf. Alle drei Stoßfängerquerträger-Abschnitte weisen die gleiche Höhe auf, so dass sich der mittlere Stoßfängerquerträger-Abschnitt nicht über eine größere vertikale Höhe erstreckt als die seitlichen Stoßfängerquerträger-Abschnitte. Sie erstrecken sich also in etwa gleicher Höhenerstreckung über die Breite des Kraftfahrzeugs. Die Stoßfängerstützträger sind oberhalb der im mittleren Abschnitt vorgesehenen Aussparung, nämlich am oberen Bereich des mittleren Stoßfängerquerträger-Abschnitts, angebracht.

### DARSTELLUNG DER ERFINDUNG

Aufgabe der vorliegenden Erfindung ist es, ein Fahrzeug mit einer Stoßfängereinrichtung anzugeben, die auch bei einer niedrigen Fahrzeugfront eine verbesserte Durchströmung von in der Fahrzeugfront vorgesehenen Kühlern ermöglicht.

Diese Aufgabe wird durch das Fahrzeug mit einer Stoßfängereinrichtung mit den Merkmalen des Patentanspruchs 1 gelöst.

Dieses erfindungsgemäße Fahrzeug mit einer Stoßfängereinrichtung und zwei parallel zur Fahrzeuglängsmittelebene angeordneten Stoßfängerstützträgern, wobei die Stoßfängereinrichtung eine quer zur Fahrzeuglängsmittelebene angeordnete, mit zwei Befestigungsabschnitten versehene Stoßfängerquerträger-Anordnung aufweist, die einen Mittelabschnitt und zwei seitliche Endabschnitte aufweist, wobei die Stoßfängerquerträger-Anordnung mit ihren beiden Befestigungsabschnitten direkt oder mittels einer jeweiligen Verbindungsstruktur am zugeordneten Stoßfängerstützträger befestigt ist, wobei der Mittelabschnitt der Stoßfänger-Querträgeranordnung als ein eine Öffnung umgebender Rahmenträger mit einem oberen Querträger, einem unteren Querträger, einem linken Stützpfosten und einem rechten Stützpfosten ausgebildet ist und wobei der Mittelabschnitt zwischen den Befestigungsabschnitten vorgesehen ist und die beiden seitlichen Endabschnitte seitlich über die Befestigungsabschnitte hinaus ragen, zeichnet sich dadurch aus, dass die lichte Weite zwischen dem oberen und dem unteren Querträger größer oder gleich der Höhenerstreckung der Stoßfängerstützträger ist und dass die Stoßfängereinrichtung so ausgestaltet ist, dass anströmende Kühlluft im Wesentlichen ungehindert durch die vom Rahmenträger umgebene Öffnung zu einem hinter der Stoßfängereinrichtung gelegenen Kühler hindurchströmen kann.

### VORTEILE

Diese erfindungsgemäße Ausgestaltung eines Fahrzeugs mit einer Stoßfängereinrichtung mit einem eine Öffnung umgebenden Rahmenträger als Mittelabschnitt gestattet es, den oder die Kühler so hinter der Öffnung des Rahmenträgers zu platzieren, dass eine Durchströmung ohne Abschirmungseffekte durch Teile der Stoßfängereinrichtung möglich ist. Der Rahmenträger übernimmt mit seinem oberen Querträger und seinem unteren Querträger in diesem Mittelabschnitt die Aufgaben des Stoßfängerquerträgers. Auf diese Weise wird ein Rahmenträger mit einer entsprechend großen Öffnung geschaffen, die den Durchtritt eines ausreichend großen Kühlluftstroms ermöglicht.

Weitere bevorzugte und vorteilhafte Ausgestaltungsmerkmale der erfindungsgemäßen Stoßfängereinrichtung sind Gegenstand der Unteransprüche 2 bis 12.

Besonders bevorzugt ist die lichte Weite zwischen dem oberen und dem unteren Querträger etwa doppelt so groß wie die Höhenerstreckung der Stoßfängerstützträger. Beispielsweise beträgt die lichte Weite das 2,5-fache der Höhenerstreckung der Stoßfängerstützträger. Die lichte Weite zwischen dem oberen und dem unteren Querträger kann jedoch auch kleiner als die doppelte Höhenerstreckung der Stoßfängerstützträger sein und beispielsweise das 1,5-fache der Höhenerstreckung betragen.

Vorzugsweise ist in oder vor der Öffnung des Rahmenträgers ein Gitter vorgesehen. Dieses Gitter kann ein Schutzgitter für den oder die hinter der Öffnung gelegenen Kühler bilden.

Alternativ kann zum Schutz des Kühlers in oder vor der Öffnung des Rahmenträgers eine Seil- oder Stangenanordnung vorgesehen sein.

Vorteilhaft ist dabei, wenn die Seil- oder Stangenanordnung parallel zum unteren und/oder oberen Querträger verlaufende Seile oder Stangen aufweist. Diese quer verlaufenden Seile oder Stangen können im Falle einer Kollision in der Stoßfängereinrichtung auftretende Querkräfte aufnehmen.

In einer dazu alternativen Ausführungsform kann die Seil- oder Stangenanordnung quer, insbesondere rechtwinklig, zum unteren und/oder oberen Querträger verlaufenden Seile oder Stangen aufweisen.

Auch kann vorzugsweise in oder vor der Öffnung des Rahmenträgers eine Lamellenanordnung vorgesehen sein. Dabei ist es vorteilhaft, wenn die Lamellenanordnung parallel zum unteren und/oder oberen Querträger verlaufende Lamellen aufweist. Alternativ kann die Lamellenanordnung rechtwinklig zum unteren und/oder oberen Querträger verlaufende Lamellen aufweisen.

In einer vorteilhaften Weiterbildung der erfindungsgemäßen Stoßfängereinrichtung ist zwischen dem linken Stützpfosten und dem rechten Stützpfosten zumindest ein weiterer Stützpfosten vorgesehen ist, der den oberen Querträger und den unteren Querträger miteinander verbindet. Durch diesen zumindest einen weiteren Stützpfosten wird die Statik des Rahmenträgers verbessert, wodurch insbesondere auch im Falle einer Kollision das Risiko des Eindringens von Fremdkörpern in die Öffnung des Rahmenträgers und damit einer Beschädigung des Kühlers herabgesetzt wird.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine Frontansicht eines mit einer erfindungsgemäßen Stoßfängereinrichtung ausgestatteten Fahrzeugs;
- Fig. 2: eine perspektivische Ansicht einer schematisch wiedergegebenen Ausführungsform einer erfindungsgemäßen Stoßfängereinrichtung, isoliert vom Fahrzeug dargestellt;
- Fig. 3: eine mit der vorderen Karosseriestruktur eines Fahrzeugs verbundene erste Ausführungsform einer erfindungsgemäßen Stoßfängereinrichtung und
- Fig. 4: eine mit der vorderen Karosseriestruktur eines Fahrzeugs verbundene zweite, alternative Ausführungsform einer erfindungsgemäßen Stoßfängereinrichtung.

### DARSTELLUNG VON BEVORZUGTEN AUSFÜHRUNGSBEISPIELEN

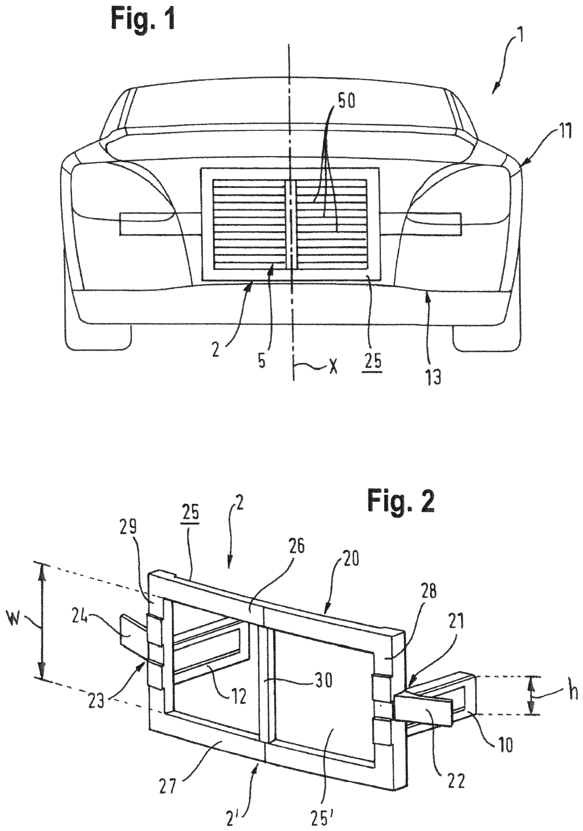

In Fig. 1 ist die Frontansicht eines Fahrzeugs 1 mit einer erfindungsgemäßen Stoßfängereinrichtung 2 schematisch dargestellt. Die Stoßfängereinrichtung 2 ist hinter einer Fahrzeugfrontverkleidung 13 verborgen, die Teil der Fahrzeugkarosserie 11 ist. Zur besseren Erkennbarkeit des Aufbaus und der Anordnung der erfindungsgemäßen Stoßfängereinrichtung 2 ist diese in Fig. 1 mit durchgezogenen Linien dargestellt, obwohl sie hinter der Fahrzeugfrontverkleidung 13 gelegen und somit von außen nicht sichtbar ist.
Die Stoßfängereinrichtung 2 weist eine quer zur senkrechten Fahrzeuglängsmittelebene X angeordnete Stoßfängerquerträger-Anordnung 20 auf, die nachstehend in Verbindung mit Fig. 2 näher beschrieben wird.

Die in Fig. 2 schematisch dargestellte Stoßfängerquerträger-Anordnung 20 der Stoßfängereinrichtung 2 weist zwei Befestigungsabschnitte 21, 23 auf, mit denen die Stoßfängereinrichtung 2 jeweils an einem mit der Fahrzeugkarosserie
verbundenen oder integral ausgebildeten Stoßfängerstützträger 10, 12 unmittelbar oder mittelbar durch Vorsehen zusätzlicher (nicht gezeigter) Crash-Boxen befestigbar ist. Über die Befestigungsabschnitte 21, 23 und die Stoßfängerstützträger 10, 12 werden im Kollisionsfall auf die Stoßfängereinrichtung 2 einwirkende Kräfte in die Fahrzeugstruktur übertragen.

Zwischen den beiden Befestigungsabschnitten 21, 23 der Stoßfängereinrichtung 2 ist ein Mittelabschnitt 2' der Stoßfängerquerträger-Anordnung 20 vorgesehen, der als Rahmenträger 25 ausgebildet ist. Dieser Rahmenträger 25 besteht im Wesentlichen aus einem linken Stützpfosten 28 und einem rechten Stützpfosten 29, in oder an denen der jeweilige Befestigungsabschnitt 21, 23 ausgebildet ist, sowie einem oberen Querträger 26 und einem unteren Querträger 27, die mit den Stützpfosten 28, 29 verbunden sind und ein geschlossenes Rahmenprofil des Rahmenträgers 25 bilden. Dieses Rahmenprofil umschließt eine Öffnung 25', durch die die Kühlluft im Wesentlichen ungehindert zu den hinter der Stoßfängereinrichtung 2 gelegenen (nicht gezeigten) Kühlern des Fahrzeugs strömen kann.

Die lichte Weite w zwischen dem oberen Querträger 26 und dem unteren Querträger 27 ist größer als die Höhenerstreckung h der Stoßfängerstützträger 10, 12. Wie bereits oben erwähnt wird hierdurch ermöglicht, dass die Kühlluft im Wesentlichen ungehindert durch die Öffnung 25' des Rahmenträgers 25 zu dem hinter der Stoßfängereinrichtung 2 gelegenen Kühler (nicht dargestellt) strömen kann. Im vorliegenden Ausführungsbeispiel beträgt die lichte Weite w etwa das 2,5 fache der Höhenerstreckung h der Stoßfängerstützträger 10, 12. Selbstverständlich kann die lichte Weite w auch abweichend von diesem Wert sein. Für eine ausreichende Durchströmung mit Kühlluft ist die lichte Weite w zwischen dem oberen Querträger 26 und dem unteren Querträger 27 jedoch mindestens so groß wie die Höhenerstreckung h der Stoßfängerstützträger 10, 12.

In der Mitte des Rahmenträgers 25 ist zwischen dem linken Stützpfosten 28 und dem rechten Stützpfosten 29 zur Versteifung des Rahmenträgers 25 ein optionaler weiterer vertikaler Stützpfosten 30 vorgesehen, der den oberen Querträger 26 und den unteren Querträger 27 miteinander verbindet.

Von den vertikalen Stützpfosten 28, 29 zur jeweiligen Fahrzeugaußenseite erstrecken sich ein linker seitlicher Endabschnitt 22 beziehungsweise ein rechter seitlicher Endabschnitt 24 der Stoßfängerquerträger-Anordnung 20 in herkömmlicher Weise, beispielsweise ausgehend von etwa der Mitte des jeweiligen Stützpfostens 28, 29.

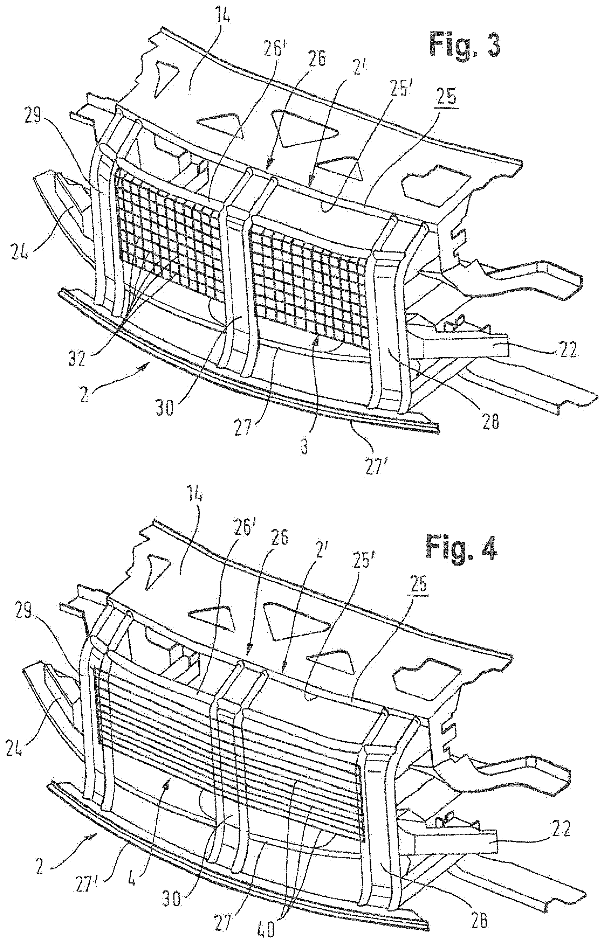

In Fig. 3 ist eine konstruktive Ausgestaltung einer Fahrzeugfront mit einer integrierten erfindungsgemäßen Stoßfängereinrichtung 2 dargestellt, wobei hier die gleichen Bezugszeichen wie in Fig. 2 die gleichen Bauteile bezeichnen. Der obere Querträger 26 ist durch ein vorderes Strukturteil 14 der Fahrzeugkarosserie 11 und einen oberen Hilfs-Querträger 26' gebildet. Vor der Öffnung 25' des Rahmenträgers 25 ist ein Gitter 3 als Teil der Stoßfängereinrichtung 2 vorgesehen, das das Eindringen von größeren Fremdkörpern durch die Öffnung 25 verhindert und so den dahinter gelegenen (nicht gezeigten) Kühler vor Beschädigungen bewahrt. Das Gitter 3 besteht aus im Querschnitt sehr dünnen Gitterstäben oder Gitterdrähten 32 und stellt so für den Fahrtwind kein übermäßiges Strömungshindernis dar, so dass die Kühlluftströmung durch die Öffnung 25' nicht in relevanter Weise behindert wird.

In dem in Fig. 3 gezeigten Beispiel stehen die vertikal verlaufenden Pfosten 28, 29 und 30 nach unten über den unteren Querträger 27 hervor und sind durch einen in Fahrzeugquerrichtung verlaufenden Hilfsträger 27' miteinander verbunden, der beispielsweise zum Abstützen des unteren Teils der Fahrzeugfrontverkleidung 13 der Fahrzeugkarosserie 11 dient.

Eine alternative Ausgestaltung der in Fig. 3 gezeigten Stoßfängereinrichtung ist in Fig. 4 dargestellt. Die Stoßfängereinrichtung 2 ist hier in der gleichen Weise aufgebaut wie dies im Beispiel der Fig. 3 der Fall ist, so dass auch hier dieselben Bezugszeichen dieselben Bauteile bezeichnen. Lediglich anstelle des Gitters 3 ist im Beispiel der Fig. 4 eine Seil- oder Stangenanordnung 4 vorgesehen, die eine Vielzahl von parallel zum oberen Querträger 26 und zum unteren Querträger 27 verlaufenden Seilen 40 oder Stangen aufweist. Diese Seile 40 oder Stangen sind von einem so dünnen Querschnitt, dass sie ebenfalls für den Kühlluftstrom kein wesentliches Hindernis darstellen, aber das Eindringen von größeren Fremdkörpern durch die Öffnung 25' verhindern. Anstelle der in Fig. 4 gezeigten horizontalen Anordnung der Seile 40 können die Seile oder die Stangen auch quer zum oberen beziehungsweise unteren Querträger 26, 27, insbesondere senkrecht, verlaufen.

Anstelle des in Fig. 3 dargestellten Gitters 3 oder der in Fig. 4 dargestellten Seil- oder Stangenanordnung 4 kann in oder vor der Öffnung 25' des Rahmenträgers 25 auch eine Lamellenanordnung 5 vorgesehen sein, wie sie schematisch in Fig. 1 dargestellt ist. Diese Lamellenanordnung 5 weist eine Vielzahl von Lamellen 50 auf, die im gezeigten Beispiel der Fig. 1 quer verlaufen, die aber auch senkrecht verlaufen können. Vorzugsweise wird jedoch die gezeigte Anordnung mit quer oder horizontal verlaufenden Lamellen 50 realisiert. Die Lamellen 50 können starr im Rahmenträger 25 angeordnet sein, sie können aber auch nach Art einer Jalousie verschwenkbar angeordnet und von einer Antriebs- und Steuerungseinrichtung betätigbar sein, um beispielsweise den Volumenstrom der durch die Öffnung 25' hindurch tretenden Kühlluftströmung regulieren zu können.

Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Fahrzeug (1) mit einer Stoßfängereinrichtung (2) und zwei parallel zur Fahrzeuglängsmittelebene (X) angeordneten Stoßfängerstützträgern (10, 12),
wobei die Stoßfängereinrichtung (2) eine quer zur Fahrzeuglängsmittelebene (X) angeordnete, mit zwei Befestigungsabschnitten (21, 23) versehene Stoßfängerquerträger-Anordnung (20) aufweist, die einen Mittelabschnitt (2') und zwei seitliche Endabschnitte (22, 24) aufweist,
wobei die Stoßfängerquerträger-Anordnung (20) mit ihren beiden Befestigungsabschnitten (21, 23) direkt oder mittels einer jeweiligen Verbindungsstruktur am zugeordneten Stoßfängerstützträger (10, 12) befestigt ist,
wobei der Mittelabschnitt (2') der Stoßfänger-Querträgeranordnung (20) als ein eine Öffnung (25') umgebender Rahmenträger (25) mit einem oberen Querträger (26), einem unteren Querträger (27), einem linken Stützpfosten (28) und einem rechten Stützpfosten (29) ausgebildet ist, wobei der Mittelabschnitt (2') zwischen den Befestigungsabschnitten (21, 23) vorgesehen ist und die beiden seitlichen Endabschnitte (22, 24) seitlich über die Befestigungsabschnitte (21, 23) hinaus ragen
**dadurch gekennzeichnet,**
**dass** die lichte Weite (w) zwischen dem oberen und dem unteren Querträger (26, 27) größer oder gleich der Höhenerstreckung (h) der Stoßfängerstützträger (10, 12) ist und
**dass** die Stoßfängereinrichtung (2) so ausgestaltet ist, dass anströmende Kühlluft im Wesentlichen ungehindert durch die vom Rahmenträger (25) umgebene Öffnung (25') zu einem hinter der Stoßfängereinrichtung (2) gelegenen Kühler hindurchströmen kann.

2. Fahrzeug nach Anspruch 1,
**dadurch gekennzeichnet,**
**dass** die lichte Weite (w) zwischen dem oberen und dem unteren Querträger (26, 27) etwa das 1,5-fache der Höhenerstreckung (h) der Stoßfängerstützträger (10, 12) beträgt.

3. Fahrzeug nach Anspruch 1,
**dadurch gekennzeichnet,**
**dass** die lichte Weite (w) zwischen dem oberen und dem unteren Querträger (26, 27) etwa das 2,5-fache der Höhenerstreckung (h) der Stoßfängerstützträger (10, 12) beträgt.

4. Fahrzeug nach einem der vorhergehenden Ansprüche,
**dadurch gekennzeichnet,**
**dass** in oder vor der Öffnung (25') des Rahmenträgers (25) ein Gitter (3) vorgesehen ist.

5. Fahrzeug nach einem der Ansprüche 1 bis 3, **dadurch gekennzeichnet,**
**dass** in oder vor der Öffnung (25') des Rahmenträgers (25) eine Seil- oder Stangenanordnung (4) vorgesehen ist.

6. Fahrzeug nach Anspruch 5, **dadurch gekennzeichnet,**
**dass** die Seil- oder Stangenanordnung (4) parallel zum unteren und/oder oberen Querträger (26, 27) verlaufende Seile (40) oder Stangen aufweist.

7. Fahrzeug nach Anspruch 5, **dadurch gekennzeichnet,**
**dass** die Seil- oder Stangenanordnung (4) quer, insbesondere rechtwinklig, zum unteren und/oder oberen Querträger (26, 27) verlaufende Seile oder Stangen aufweist.

8. Fahrzeug nach einem der Ansprüche 1 bis 3, **dadurch gekennzeichnet,**
**dass** in oder vor der Öffnung (25') des Rahmenträgers (25) eine Lamellenanordnung (5) vorgesehen ist.

9. Fahrzeug nach Anspruch 8, **dadurch gekennzeichnet,**
**dass** die Lamellenanordnung (5) parallel zum unteren und/oder oberen Querträger verlaufende Lamellen (50) aufweist.

10. Fahrzeug nach Anspruch 8, **dadurch gekennzeichnet,**
**dass** die Lamellenanordnung (5) rechtwinklig zum unteren und/oder oberen Querträger verlaufende Lamellen aufweist.

11. Fahrzeug nach einem der vorhergehenden Ansprüche,
**dadurch gekennzeichnet,**
**dass** zwischen dem linken Stützpfosten (28) und dem rechten Stützpfosten (29) zumindest ein weiterer Stützpfosten (30) vorgesehen ist, der den oberen Querträger (26) und den unteren Querträger (27) miteinander verbindet.

## Claims

1. A vehicle (1) having a bumper device (2) and two bumper support carriers (10, 12) which are arranged parallel to the vehicle longitudinal median plane (X),
the bumper device (2) having a bumper crossmember arrangement (20) which is arranged transversely to the vehicle longitudinal median plane (X) and has two fastening sections (21, 23), and which has a middle section (2') and two lateral end sections (22, 24),
the bumper crossmember arrangement (20) with its two fastening sections (21, 23) being connected directly or by means of a respective connecting structure to the corresponding bumper support carriers (10, 12),
the middle section (2') of the bumper crossmember arrangement (20) being formed as a frame support (25) surrounding an opening (25') and having an upper crossmember (26), a lower crossmember (27), a left support post (28) and a right support post (29), the middle section (2') being provided between the fastening sections (21, 23) and the two lateral end sections (22, 24) projecting laterally beyond the fastening sections (21, 23), **characterized in that**
the clear width (w) between the upper and lower crossmembers (26, 27) is greater than or equal to the height extension (h) of the bumper support carriers (10, 12) and **in that**
the bumper device (2) is designed in such a way that inflowing cooling air can flow essentially unhindered through the opening (25') surrounded by the frame support (25) to a cooler located behind the bumper device (2).

2. A vehicle according to Claim 1,
**characterized in that**
the clear width (w) between the upper and the lower crossmember (26, 27) is approximately 1.5 times the height extension (h) of the bumper support carriers (10, 12).

3. A vehicle according to Claim 1,
**characterized in that**
the clear width (w) between the upper and the lower crossmember (26, 27) is approximately 2.5 times the height extension (h) of the bumper support carriers (10, 12).

4. A vehicle according to one of the preceding claims, **characterized in that**
a grille (3) is provided in or in front of the opening (25') of the frame support (25).

5. A vehicle according to one of Claims 1 to 3, **characterized in that** a cable or rod arrangement (4) is provided in or in front of the opening (25') of the frame support (25).

6. A vehicle according to Claim 5,
**characterized in that**
the cable or rod arrangement (4) has cables (40) or rods running parallel to the lower and/or upper crossmember (26, 27).

7. A vehicle according to Claim 5,
**characterized in that**
the cable or rod arrangement (4) has cables or rods running transversely, in particular at right angles, to the lower and/or upper crossmember (26, 27).

8. A vehicle according to one of Claims 1 to 3,
**characterized in that**
a lamella arrangement (5) is provided in or in front of the opening (25') of the frame support (25).

9. A vehicle according to Claim 8,
**characterized in that**
the lamella arrangement (5) has lamellae (50) running parallel to the lower and/or upper crossmember.

10. A vehicle according to Claim 8,
**characterized in that**
the lamella arrangement (5) has lamellae running at right angles to the lower and/or upper crossmember.

11. A vehicle according to one of the preceding claims,
**characterized in that**
between the left support post (28) and the right support post (29), at least one further support post (30) is provided which connects the upper crossmember (26) and the lower crossmember (27) to one another.

## Revendications

1. Véhicule (1) comprenant un dispositif de pare-chocs (2) et deux poutres de support de pare-chocs (10, 11) parallèles au plan longitudinal médian (X) du véhicule,
le dispositif de pare-chocs (2) comprenant un agencement de support transversal de pare-chocs (20) équipé de deux segments de fixation (21, 23) situé transversalement au plan longitudinal médian (X) du véhicule, qui comporte un segment médian (2') et deux segments d'extrémité latéraux (22, 24),
l'agencement de support transversal du pare-chocs (20) étant fixé à des poutres de support de pare-chocs (10, 12) associées par ses deux segments de fixation (21, 23) directement ou au moyen d'une structure de liaison respective,
le segment médian (2') de l'agencement de support transversal de pare-chocs (20) étant réalisé sous la forme d'un cadre support (25) entourant une ouverture (25') et équipé d'un support transversal supérieur (26), d'un support transversal inférieur (27), d'un montant d'appui gauche (28) et d'un montant d'appui droit (29), le segment médian (2') étant situé entre les segments de fixation (21, 23) et les deux segments d'extrémité latéraux (22, 24) dépassant latéralement des segments de fixation (21, 23),
**caractérisé en ce que**
la largeur libre (w) entre le support transversal supérieur et le support transversal inférieur (26, 27) est supérieure ou égale à l'extension en hauteur (h) de la poutre de support de pare-chocs (10, 12), et
le dispositif de pare-chocs (2) est réalisé de sorte qu'un flux d'air de refroidissement puisse circuler essentiellement sans obstacle au travers de l'ouverture (25') entourée par le cadre support (25) vers un refroidisseur monté à l'arrière du dispositif de pare-chocs (2).

2. Véhicule conforme à la revendication 1,
**caractérisé en ce que**
la largeur libre (w) entre le support transversal supérieur et le support transversal inférieur (26, 27) est environ égale 1,5 fois l'extension en hauteur (h) de la poutre de support de pare-chocs (10, 12).

3. Véhicule conforme à la revendication 1,
**caractérisé en ce que**
la largeur libre (w) entre le support transversal supérieur et le support transversal inférieur (26, 27) est environ égale à 2, 5 fois l'extension en hauteur (h) de la poutre de support de pare-chocs (10, 12).

4. Véhicule conforme à l'une des revendications précédentes,
**caractérisé en ce qu'**
une grille (3) est montée dans ou à l'avant de l'ouverture (25') du cadre support (25).

5. Véhicule conforme à l'une des revendications 1 à 3,
**caractérisé en ce qu'**
un dispositif de câbles ou de barres (4) est prévu dans ou à l'avant de l'ouverture (25') du cadre support (25).

6. Véhicule conforme à la revendication 5,
**caractérisé en ce que**
le dispositif de câbles ou de barres (4) comporte des câbles (40) ou des barres s'étendant parallèlement au support transversal inférieur et/ou au support transversal supérieur (26, 27).

7. Véhicule conforme à la revendication 5,
**caractérisé en ce que**
le dispositif de câbles ou de barres (4) comporte des câbles ou des barres s'étendant transversalement et en particulier perpendiculairement au support transversal inférieur et/ou au support transversal supérieur (26, 27).

8. Véhicule conforme à l'une des revendications 1 à 3,
**caractérisé en ce qu'**
il comporte un dispositif à ailettes (5) dans ou à l'avant l'ouverture (25') du cadre support (25).

9. Véhicule conforme à la revendication 8,
**caractérisé en ce que**
le dispositif à ailettes (5) comporte des ailettes (50) s'étendant parallèlement au support transversal inférieur et/ou au support transversal supérieur.

10. Véhicule conforme à la revendication 8,
**caractérisé en ce que**
le dispositif à ailettes (5) comporte des ailettes s'étendant perpendiculairement au support transversal inférieur et/ou au support transversal supérieur.

11. Véhicule conforme à l'une des revendications précédentes,
**caractérisé en ce qu'**
entre le montant d'appui gauche (28) et le montant d'appui droit (29) il est prévu au moins un autre montant d'appui (30) qui relie le support transversal supérieur (26) et le support transversal inférieur (27).
